(19) Europäisches Patentamt
European Patent Office
Office européen des brevets

(11) EP 2 383 541 B1

(12) EUROPÄISCHE PATENTSCHRIFT

(45) Veröffentlichungstag und Bekanntmachung des Hinweises auf die Patenterteilung:
26.06.2013 Patentblatt 2013/26

(51) Int Cl.:
G01B 21/30 (2006.01)

(21) Anmeldenummer: 11003013.7

(22) Anmeldetag: 11.04.2011

(54) **Verfahren zur Ermittlung einer Drallstruktur**

Method of lead measurement

Procédé pour déterminer une structure en hélice

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 29.04.2010 DE 102010018820

(43) Veröffentlichungstag der Anmeldung:
02.11.2011 Patentblatt 2011/44

(73) Patentinhaber: JENOPTIK Industrial Metrology Germany GmbH
78056 Villingen-Schwenningen (DE)

(72) Erfinder: Seewig, Jörg
30539 Hannover (DE)

(74) Vertreter: Wagner, Carsten
Wagner Dr. Herrguth
Patentanwälte
Burckhardtstrasse 1
30163 Hannover (DE)

(56) Entgegenhaltungen:
DE-C1- 19 740 141

• J. SEEWIG, T. HERCKE: 2ND GENERATION LEAD MEASUREMENT, XIX IMECO WORLD CONGRESS FUNDAMENTAL AND APPLIED METROLOGY, 2009, Seiten 1957-1961, XP002649777,

**Beschreibung**

Die Erfindung betrifft ein Verfahren der im Oberbegriff des Anspruchs 1 genannten Art zur Ermittlung einer Drallstruktur in der Oberflächenrauheit eines wenigstens abschnittsweise zylindrischen Bauteiles.

Drallstrukturen können in der Oberfläche von zylindrischen Bauteilen insbesondere während einer spanenden Bearbeitung, beispielsweise einer Schleifbearbeitung der Werkstückoberfläche entstehen. Als Drall wird eine gerichtete Struktur in Umfangsrichtung auf insbesondere wellen im System Welle/Wellendichtring bezeichnet. Je nach Ausprägung kann der Drall zu einer Undichtigkeit zwischen Wellen und Wellendichtring führen.

Aus diesem Grunde ist es bekannt, die Drallstruktur mit geeigneten Meßverfahren zu ermitteln.

Entsprechend der Ausprägung des Dralls wird zwischen einem Makrodrall und einem Mikrodrall unterschieden. Der Makrodrall kann als beispielsweise als Abrichtdrall ausgebildet sein, bei dem es sich um eine axialperiodische, ein- bis mehrgängige unter einem Winkel umlaufende Struktur handelt. Der Makrodrall kann jedoch auch als periodischer oder nichtperiodischer Nulldrall ausgestaltet sein, bei dem die Gänge der Drallstruktur exakt in Umfangsrichtung liegen und sich schließen. Ferner kann der Makrodrall als Vorschubdrall ausgebildet sein, bei dem es sich um eine periodische, eingängige unter einem Winkel umlaufende Struktur mit der Periodenlänge des Vorschubs handelt. Bei dem Mikrodrall kann es sich insbesondere um einen Schränkungsdrall handeln, der in einer Mikro-Schleifstruktur besteht, deren Hauptstrukturrichtung eine Rechtwinkligkeitsabweichung zur Werkstückachse aufweist.

Im Rahmen der Erfindung wird Makrodrall (nachfolgend auch kurz als "Drall" bezeichnet) behandelt, der sowohl in axialer Richtung als auch in Umfangsrichtung periodisch ausgeprägt ist. Die periodische Ausprägung in Umfangsrichtung ist ganzzahlig und wird auch als "Gängigkeit" bezeichnet. Eine detaillierte Beschreibung der Drallmeßtechnik gemäß dem Stand der Technik findet sich in der Mercedes-Benz-Werksnorm MBN 31 007-7.

Durch DE 197 40 141 C1 ist ein verfahren zur Ermittlung einer Drallstruktur in der Oberflächenrauheit eines feinbearbeiteten voll- oder hohlzylindrischen werkstückes bekannt, bei dem auf einem interessierenden Umfangsstreifen des Werkstückes mehrere axial ausgerichtete Tastschnitte mit hoher axialer Meßpunktdichte an unterschiedlicher, aber jeweils exakt bekannter Umfangsposition sowie mit jeweils exakt bekannter Axiallage durchgeführt werden, wobei die einzelnen lokalen Rauheitsprofile der verschiedenen Tastschnitte gemäß ihrer axialen und umfangsmäßigen Relativlage auf dem Werkstück lageentsprechend in dichter Folge nebeneinander ausgedruckt werden, wobei die Meßaufschriebe in Radial- und in Axialrichtung überhöht bzw. gedehnt und in Umfangsrichtung gestaucht wiedergegeben werden und so eine bezüglich der einzelnen Dimensionen unterschiedlich affin verfälschte, aber die Mikrostruktur der Oberfläche des Umfangsstreifens als Abwicklung in Schrägansicht plastisch veranschaulichende Topographie dargestellt wird.

Durch DE 10 2006 001 799 B4 ist ein Verfahren zur Drallmessung an Werkstückoberflächen bekannt, bei dem die Werkstückoberfläche zur Gewinnung von Meßwerten entlang einer Linie abgetastet wird, die eine Axialkomponente parallel zu der Achse sowie eine Umfangskomponente in Umfangsrichtung der Achse aufweist, wobei die Linie zumindest einen ersten Abschnitt und zumindest einen zweiten Abschnitt aufweist, wobei die Abschnitte in der Achse unterschiedliche Winkel aufweisen, wonach aus den Meßwerten zumindest eine die Drallstruktur kennzeichnende Kenngröße bestimmt wird.

Durch die Literaturstelle "J. Seewig, T. Hercke: 2nd Generation Lead Measurement, XIX IMECO World Congress Fundamental and Applied Metrology, 2009, 1957-1961, ISBN 978-963-88410-01, Lissabon, Portugal" ist ein Verfahren der betreffenden Art zur Ermittlung einer Drallstruktur in der Oberflächenrauheit eines Werkstückes bekannt. Das aus der Literaturstelle bekannte Verfahren wird auch als Drallmeßverfahren der zweiten Generation bezeichnet. Bei diesem Verfahren wird in einem interessierenden Oberflächenbereich des Werkstücks eine Mehrzahl von in Axialrichtung des Werkstücks verlaufenden, in Umfangsrichtung zueinander beabstandeten Tastschnitten durchgeführt. Ein erstes "grobes" Meßraster besteht aus 72 Tastschnitten am Umfang mit einer Winkelschrittweite von 5° und einer Meßlänge von mindestens 2 mm. Dieses grobe Meßraster ermöglicht die Beschreibung von Drallstrukturen mit einer maximalen Gängigkeit von 15. Höhere Gängigkeiten werden mit einem zweiten Meßraster erfaßt, das aus 72 Tastschnitten mit einer Winkelschrittweite von 0,5° und einer Meßlänge von ebenfalls 2 mm besteht.

Grundlage der Auswertung bildet eine Rekonstruktion der dominierenden Drallstruktur aus dem Meßdatensatz. Hierzu wird eine aus drei additiv überlagerten, harmonisch verwandten Kosinusfunktionen mit 8 freien Parametern in die diskreten Meßdaten gemäß der Summe der kleinsten Abweichungsquadrate eingepaßt. Hinsichtlich der Einzelheiten dieses Auswertungsverfahrens wird auf die Literaturstelle verwiesen. Die Drallstruktur wird hierbei durch 6 Kenngrößen charakterisiert, nämlich die Dralltiefe $Dt$, die Gängigkeit $DG$, den theoretischen Förderquerschnitt $DF$ pro Umdrehung $DFu$, die Periodenlänge $DP$ und die prozentuale Auflagefläche $DLv$. Die Ermittlung der Kenngröße oder der Kenngrößen der Drallstruktur erfolgt bei dem bekannten Verfahren sequentiell in drei Schritten: Zunächst wird ein Meßraster gewählt und die Tastschnitt-Messung durchgeführt. Anschließend erfolgt die Ermittlung der dominierenden Drallstruktur und der Kennwerte.

Der Erfindung liegt die Aufgabe zugrunde, ein Verfahren der im Oberbegriff des Anspruchs 1 genannten Art zur Ermittlung einer Drallstruktur in der Oberflächenrauheit eines wenigstens abschnittsweise zylindrischen Werkstücks anzugeben, dessen Eignung für einen Einsatz in einer Serienfertigung verbessert ist.

Diese Aufgabe wird durch die im Anspruch 1 angegebene Erfindung gelöst.

Die Erfindung geht weiterhin von einer taktilen Messung in einem Tastschnittverfahren aus. Ihr liegt die Erkenntnis zugrunde, daß die Erfassung der Meßdaten hierbei eine erhebliche Zeit in Anspruch nimmt. Bei einer üblichen Vorschubgeschwindigkeit von 0,5 mm/sec und einer Meßstrecke von 2 mm ergibt sich die theoretisch kleinste Meßzeit von 4 min und 48 sec. Hiervon ausgehend liegt der Erfindung der Gedanke zugrunde, das bekannte Verfahren so zu modifizieren, daß aussagekräftige Ergebnisse schneller erhalten werden. Hiervon ausgehend liegt der Erfindung der weitere Gedanke zugrunde, Drallstrukturen zu erkennen, ohne einen vollständigen Meßdatensatz, beispielsweise bestehend aus 72 Tastschnitten, erfassen zu müssen. Der Grundgedanke der Erfindung besteht darin, nach jedem erfaßten Tastschnitt eine "vorläufige Drallstruktur" einzupassen und die ihr zugeordneten "vorläufigen" Werte der internessierenden Kenngrößen der Drallstruktur zu berechnen. Mit Berücksichtigung der Meßwerte jedes weiteren Tastschnittes nähern sich die Schätzwerte für die Kenngröße dem eigentlichen Endergebnis an.

Die Erfindung stellt damit einen Schnelltest bereit, mit dem sich Drallstrukturen schnell erkennen lassen. Auf diese Weise ist die Einsetzbarkeit des erfindungsgemäßen Verfahrens im Rahmen von Meßvorgängen in einer Serienfertigung wesentlich verbessert.

Eine erste Aussage über die Drallstruktur ergibt das erfindungsgemäße Verfahren in der oben beschriebenen Weise bereits nach Auswertung der Meßwerte eines ersten Tastschnittes. Eine vorteilhafte Weiterbildung sieht vor, daß nach jedem neu erfaßten Tastschnitt der Schätzwert oder die Schätzwerte korrigiert wird bzw. werden. Bei dieser Ausführungsform verbessert sich die Genauigkeit der Ergebnisse des Verfahrens mit Hinzunahme der Meßwerte jedes weiteren Tastschnittes und konvergiert schließlich bis zu einem Endergebnis, das auf der Auswertung der Meßdaten sämtlicher Tastschnitte beruht.

In diesem Zusammenhang ist es vorteilhaft, daß zur Ermittlung eines Endergebnisses der Kenngröße die Korrektur der Schätzwerte wiederholt wird, bis die Meßwerte sämtlicher Tastschnitte berücksichtigt sind. Auf diese Weise kann einerseits schnell eine Aussage darüber getroffen werden, ob und mit welcher Ausprägung eine Drallstruktur vorliegt. Andererseits ergibt sich durch Berücksichtigung der Meßwerte sämtlicher Tastschnitte eine hohe Genauigkeit. Gegenüber dem bekannten Verfahren besteht der Vorteil, daß die einem Tastschnitt zugeordneten Meßwerte simultan zu der Durchführung des nächsten Tastschnittes ausgewertet werden können.

Eine andere Weiterbildung der Erfindung sieht vor, daß anhand der dem ersten Tastschnitt zugeordneten Meßwerte Schätzwerte für die Dralltiefe und die Periodenlänge ermittelt werden.

Gemäß einer anderen Weiterbildung wird nach Durchführung des zweiten Tastschnittes ein Schätzwert für die Gängigkeit der Drallstruktur ermittelt.

Die Erfindung wird nachfolgend anhand eines Ausführungsbeispieles näher erläutert.

Ein Ausführungsbeispiel eines erfindungsgemäßen Verfahrens zur Ermittlung einer Drallstruktur in der oberflächenrauheit eines wenigstens abschnittsweise zylindrischen Werkstückes vollzieht sich wie folgt:

Zur Ermittlung einer Drallstruktur können in einem interessierenden Oberflächenbereich des Werkstückes eine Mehrzahl von in Axialrichtung des Werkstückes verlaufenden, in Umfangsrichtung zueinander beabstandeten Tastschnitten durchgeführt werden, wobei ein erstes "grobes" Meßraster aus 72 Tastschnitten mit einer Winkelschrittweite von 5° am Umfang und einer Meßlänge von mindestens 2 mm durchgeführt werden kann. Dieses grobe Meßraster ermöglicht die Beschreibung von Drallstrukturen mit einer maximalen Gängigkeit von 15. Höhere Gängigkeiten können mit einem zweiten Meßraster erfaßt werden, das aus 72 Tastschnitten mit einer Winkelschrittweite von 0,5° und einer Meßlänge von ebenfalls 2 mm besteht.

Grundlage der Auswertung bildet eine Rekonstruktion der dominierenden Drallstruktur aus dem Meßdatensatz. Hierzu wird eine Funktion $w((m{\cdot}\Delta\theta,n{\cdot}\Delta x,\Theta)$ bestehend aus drei additiv überlagerten, harmonisch verwandten Kosinusfunktionen mit acht freien Parametern $\Theta = [\Theta_1,...,\Theta_\theta]^T$ in die diskreten Meßdaten $z(m{\cdot}\Delta\theta,n{\cdot}\Delta x)$ gemäß der Methode der Summe der kleinsten Abweichungsquadrate eingepaßt:

$$\sum_{m=0}^{71}\sum_{n=0}^{N-1}\left(z(m\cdot\Delta\theta,n\cdot\Delta x)-w(m\cdot\Delta\theta,n\cdot\Delta x,\Theta)\right)^2 \to \min_{\Theta} \qquad (1)$$

Die Ausgleichsfunktion $w(m{\cdot}\Delta\theta,\mathrm{n}{\cdot}\Delta x,\Theta)$ ist definiert durch

$$w(m \cdot \Delta\theta, n \cdot \Delta x, \Theta) = \sum_{k=1}^{3} A_k \cdot \cos\left(2 \cdot \pi \cdot k \cdot \left(\frac{n \cdot \Delta x}{\lambda} + DG \cdot \frac{m \cdot \Delta\Phi}{360°}\right) + \varphi_k\right)$$

mit

$\Delta x$: Abtastschrittweite in axialer Richtung in mm
$\Delta\Phi$: Abtastschrittweite in Umfangsichtung in Grad

sowie den Parametern

$\lambda$: Wellenlänge der periodischen Komponente in axialer Richtung in mm
DG: ganzzahlige Gängigkeit (dimensionslos)
$A_k$: Amplitude der Kosinusfunktion in $\mu$m
$\Phi_k$: Winkeloffset der Kosinusfunktion in Radian

Einzelheiten der Auswertung sowie der Meßdatenerfassung sind aus der Literaturstelle "J. Seewig, T. Hercke: 2nd Generation Lead Measurement, XIX IMECO World Congress Fundamental and Applied Metrology, 2009, 1957-1961, ISBN 978-963-88410-01, Lissabon, Portugal" bekannt und werden daher hier nicht näher erläutert.

Grundlage des erfindungsgemäßen Verfahrens bildet eine geschickte Auswertung des Optimierungsproblemes gemäß der obigen Gleichung (1). Gemäß der Literaturstelle "J. Seewig, T. Hercke: 2nd Generation Lead Measurement, XIX IMECO World Congress Fundamental and Applied Metrology, 2009, 1957-1961, ISBN 978-963-88410-01, Lissabon, Portugal" besteht der Grundalgorithmus aus zwei unabhängig durchzuführenden diskreten Fourier-Transformationen in axialer Richtung und in Umfangsrichtung. Dabei erfolgt zunächst die Transformation in axialer Richtung und anschließend in Umfangsrichtung. Die diskrete Fourier-Transformation in Umfangsrichtung ist dabei numerisch effizient, da nur ganzzahlige Perioden am Umfang auftreten können.

$$\sum_{n=0}^{N-1} \left(z(0 \cdot \Delta\theta, n \cdot \Delta x) - w(0 \cdot \Delta\theta, n \cdot \Delta x, \Theta_0)\right)^2 \rightarrow \min_{\Theta_0}$$

Mit Hilfe der Ausgleichfunktion $w(0 \cdot \Delta\theta, n \cdot \Delta x, \Theta_0)$ werden die ersten Schätzwerte Dto für die Dralltiefe und $DP_0$ für die Periodenlänge bestimmt. Die Gängigkeit ist nach dem ersten Tastschnitt noch undefiniert und wird zu $DG_0=0$ gesetzt.

Anschließend werden weitere Tastschnitte gemäß der Drallmeßvorschrift erfaßt. Nach jedem neu erfaßten Tastschnitt werden die zuvor berechneten Kennwerte korrigiert:

$$(Dt, DG, DP)_m = (Dt, DG, DP)_{m-1} + \Delta(Dt, DG, DP)_m, \qquad m = 1,...,71$$

Hierbei wird ausgenutzt, daß sämtliche zuvor durchgeführte diskrete Fourier-Transformationen in axialer Richtung im Speicher gehalten und nur durch die Transformation des aktuellen Tastschnittes ergänzt werden müssen. Dies führt ebenfalls auf einen numerisch effizienten Algorithmus.

Nach Messen des zweiten Tastschnittes ist erstmals eine Schätzung für die Gängigkeit möglich. Die Kennwerte nähern sich mit jeder Korrektur dem eigentlichen Endergebnis der standardisierten Drallmessung an. Nach 72 Tastschnitten und das Auswertung ihrer Ergebnisse ist das Endergebnis exakt.

Das erfindungsgemäße Verfahren stellt bei der Ermittlung von Drallstrukturen einen Schnelltest zur Verfügung. Eine erste Beurteilung der Frage, ob und in welcher Ausprägung eine Drallstruktur vorhanden ist, ermöglicht das erfindungsgemäße Verfahren bereits nach Auswertung der dem ersten Tastschnitt zugeordneten Meßwerte. In diesem Schritt können bereits Schätzwerte für die Dralltiefe und die Periodenlänge ermittelt werden. Mit Berücksichtigung der Meßwerte jedes weiteren Tastschnittes erhöht sich die Genauigkeit, wobei nach Auswertung der einem zweiten Tastschnitt zugeordneten Meßwerte erstmals ein Schätzwert für die Gängigkeit erhalten werden kann.

**EP 2 383 541 B1**

**Patentansprüche**

1. Verfahren zur Ermittlung einer Drallstruktur in der Oberflächenrauheit eines wenigstens abschnittsweise zylindrischen Werkstückes,

   bei dem in einem interessierenden Oberflächenbereich des Werkstückes eine Mehrzahl von in Axialrichtung des Werkstückes verlaufenden, in Umfangsrichtung zueinander beabstandeten Tastschnitten durchgeführt wird und bei dem anhand der durch die Tastschnitte erhaltenen Meßwerte der Wert wenigstens einer Kenngröße der Drallstruktur ermittelt wird,

   **dadurch gekennzeichnet,**

   **daß** anhand der einem ersten Tastschnitt zugeordneten Meßwerte ein Schätzwert für wenigstens eine Kenngröße der Drallstruktur ermittelt wird und

   **daß** der Schätzwert anhand der wenigstens einem zweiten Tastschnitt zugeordneten Meßwerte korrigiert wird.

2. Verfahren nach Anspruch 1, **dadurch gekennzeichnet, daß** nach jedem neu erfaßten Tastschnitt der Schätzwert oder die Schätzwerte korrigiert wird bzw. werden.

3. Verfahren nach Anspruch 1 oder 2, **dadurch gekennzeichnet, daß** zur Ermittlung eines Endergebnisses der Kenngröße die Korrektur der Schätzwerte wiederholt wird, bis die Meßwerte sämtlicher Tastschnitte berücksichtigt sind.

4. Verfahren nach einem der vorhergehenden Ansprüche, **dadurch gekennzeichnet, daß** anhand der dem ersten Tastschnitt zugeordneten Meßwerte Schätzwerte für die Dralltiefe und die Periodenlänge ermittelt werden.

5. Verfahren nach Anspruch 4, **dadurch gekennzeichnet, daß** nach Durchführung des zweiten Tastschnittes ein Schätzwert für die Gängigkeit der Drallstruktur ermittelt wird.

**Claims**

1. Method for determining a twist structure in the surface roughness of an at least partly cylindrical workpiece,

   in which in an area of interest of the surface of the workpiece a plurality of tactile sections are formed running in axial direction of the workpiece and spaced apart from one another in circumferential direction and in which with reference to the measurements obtained from the tactile sections the value of at least one parameter of the twist structure is determined,

   **characterised in that**

   with reference to the measurements assigned to the first tactile section an estimated value for at least one parameter of the twist structure is determined and

   **in that** the estimated value is corrected with reference to the measurements assigned to at least one second tactile section.

2. Method according to claim 1, **characterised in that** after each newly determined tactile section the estimated value or the estimated values is or are corrected.

3. Method according to claim 1 or 2, **characterised in that** to determine the final result of the parameter the correction of the estimated values is repeated until the measurements of all tactile sections have been taken into consideration.

4. Method according to one of the preceding claims, **characterised in that** with reference to the measurements assigned to the first tactile section estimated values for the twist depth and the cycle length are determined.

5. Method according to claim 4, **characterised in that** after performing the second tactile section an estimated value for the mobility of the twist structure is determined.

**Revendications**

1. Procédé de détermination d'une structure tourbillonnaire dans la rugosité superficielle d'une pièce au moins partiellement cylindrique,

   dans lequel, dans une zone intéressante de la surface de la pièce, est réalisée une pluralité de coupes de palpage distantes entre elles sur la périphérie et parcourant la pièce dans la direction axiale et

dans lequel, à l'aide des valeurs de mesure obtenues avec les coupes de palpage, la valeur d'au moins une grandeur caractéristique de la structure tourbillonnaire est déterminée,

**caractérisé en ce que**, à l'aide des valeurs de mesure correspondant à une première coupe par palpeur, une valeur estimée est déterminée pour au moins une grandeur caractéristique de la structure tourbillonnaire et

**en ce que** la valeur estimée est corrigée à l'aide des valeurs de mesure correspondant à au moins une deuxième coupe par palpeur.

2. Procédé selon la revendication 1, **caractérisé en ce que**, après chaque coupe par palpeur nouvellement déterminée, la valeur estimée ou les valeurs estimées est/sont corrigée(s).

3. Procédé selon la revendication 1 ou 2, **caractérisé en ce que**, pour la détermination d'un résultat final de la grandeur caractéristique, la correction des valeurs estimées est répétée jusqu'à ce que les valeurs de mesure de l'ensemble des coupes de palpage soient prises en compte.

4. Procédé selon l'une des revendications précédentes, **caractérisé en ce que**, à l'aide des valeurs de mesure correspondant à la première coupe par palpeur, des valeurs estimées sont déterminées pour la profondeur tourbillonnaire et la longueur de la période.

5. Procédé selon la revendication 4, **caractérisé en ce que**, après réalisation de la deuxième coupe par palpeur, une valeur estimée est déterminée pour la bonne marche de la structure tourbillonnaire.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19740141 C1
- DE 102006001799 B4

**In der Beschreibung aufgeführte Nicht-Patentliteratur**

- **J. SEEWIG ; T. HERCKE.** 2nd Generation Lead Measurement. *XIX IMECO World Congress Fundamental and Applied Metrology,* 2009, ISBN 978-963-88410-01, 1957-1961